(19) **Europäisches Patentamt**
**European Patent Office**
**Office européen des brevets**

(11) **EP 4 596 165 A1**

(12) **EUROPEAN PATENT APPLICATION**
published in accordance with Art. 153(4) EPC

(43) Date of publication:
06.08.2025  Bulletin 2025/32

(21) Application number: 22961042.3

(22) Date of filing: 30.09.2022

(51) International Patent Classification (IPC):
**B23K 35/30** (2006.01)

(52) Cooperative Patent Classification (CPC):
**C22C 38/002; B23K 9/0061; B23K 9/18;
B23K 35/02; B23K 35/0261; B23K 35/30;
B23K 35/3053; B23K 35/3066; B23K 35/3073;
B23K 35/3086; B23K 35/368; C22C 38/00;
C22C 38/001; C22C 38/008; C22C 38/02;**   (Cont.)

(86) International application number:
**PCT/JP2022/036863**

(87) International publication number:
**WO 2024/069983 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NIPPON STEEL CORPORATION**
**Chiyoda-ku**
**Tokyo 100-8071 (JP)**

(72) Inventors:
• **MATSUO, Hajime**
  **Tokyo 100-8071 (JP)**
• **KAMO, Takahiro**
  **Tokyo 100-8071 (JP)**

(74) Representative: **Vossius & Partner**
**Patentanwälte Rechtsanwälte mbB**
**Siebertstrasse 3**
**81675 München (DE)**

(54) **SOLID WIRE AND METHOD FOR PRODUCING WELD JOINT**

(57)  A solid wire for submerged arc welding, in which a chemical component of the solid wire includes, by mass% with respect to a total mass of the solid wire, C: from 0% to 0.650%, Si: from 0.03% to 0.50%, Mn: from 4.1% to 30.0%, P: from 0% to 0.050%, S: from 0% to 0.050%, Cu: from 0% to 5.0%, Ni: from 1.0% to 30.0%, Cr: from 0% to 10.0%, Mo: from 0% to 10.0%, Nb: from 0% to 1.00%, V: from 0% to 1.00%, Co: from 0% to 1.00%, Pb: from 0% to 1.00%, Sn: from 0% to 1.00%, Al: from 0% to 0.10%, Ti: from 0% to 0.10%, B: from 0% to 0.1000%, N: from 0% to 0.5000%, O: from 0% to 0.0050%, and balance: Fe and impurities, (Mn + Ni) is 5.0% or more, (Mn + Ni + Cr) is 15.0% or more, and a fraction of fcc is 70% or more.

**(Cont. next page)**

(52) Cooperative Patent Classification (CPC): (Cont.)
  **C22C 38/04; C22C 38/06; C22C 38/08;**
  **C22C 38/12; C22C 38/14; C22C 38/16;**
  **C22C 38/42; C22C 38/44; C22C 38/46;**
  **C22C 38/48; C22C 38/50; C22C 38/52;**
  **C22C 38/54; C22C 38/58**

**Description**

BACKGROUND

Technical Field

The present disclosure relates to a solid wire and a method of manufacturing a welded joint.

Background Art

In recent years, with tougher regulations of carbon dioxide emission due to global warming problem, demand for hydrogen fuel that emits no carbon dioxide as compared with petroleum, coal, and the like, natural gas that emits less carbon dioxide, and the like has increased. Along with this, demand for construction of liquid hydrogen tanks, liquid carbon dioxide tanks, LNG tanks, and the like used in ships, the ground, and the like is also increasing worldwide. For steel materials used for liquid hydrogen tanks, liquid carbon dioxide tanks, LNG tanks, and the like, Ni-based low temperature steels containing from 6% to 9% of Ni are used from the demand for securing toughness at an extremely low temperature of -196°C.

For welding these Ni-based low temperature steels, an austenitic wire with which a weld metal having excellent low-temperature toughness can be obtained is used. The wire is mainly designed to have a Ni content of 70%.

For example, as the wire having a Ni content of 70%, Patent Literature 1 discloses a "wire containing, as a sheath, a Ni-based alloy, a Ni content being from 35% to 70%, the flux containing $TiO_2$, $SiO_2$, and $ZrO_2$ in a total amount of 4.0 mass% or more with respect to a total mass of the wire, further containing a Mn oxide in an amount of from 0.6 mass% to 1.2 mass% in terms of $MnO_2$, and when contents of $TiO_2$, $SiO_2$, $ZrO_2$, and $MnO_2$ (converted amount) are represented, by mass%, as $[TiO_2]$, $[SiO_2]$, $[ZrOz]$, and $[MnO_2]$, respectively, $[TiO_2]/[ZrO_2]$ being from 2.3 to 3.3, $[SiO_2]/[ZrO_2]$ being from 0.9 to 1.5, and $([TiO_2] + [SiOz] + [ZrO_2])/[MnO_2]$ being from 5 to 13.

Patent Literature 1: Japanese Patent Application Laid-Open (JP-A) No. 2008-246507

SUMMARY

Technical Problem

However, a wire designed to have a Ni content of 70% for securing low-temperature toughness of a weld metal is very expensive, and an inexpensive wire is required.

Although expensive Ni is known as an austenite stabilizing element, inexpensive Mn has a similar effect. Therefore, when the Ni content is reduced and the Mn content is increased, a weld metal which is inexpensive and has excellent low-temperature toughness can be obtained. However, only by increasing Mn, toughness is deteriorated, and mechanical properties cannot be secured.

Therefore, an object of the present invention is to provide a solid wire for submerged arc welding which is inexpensive and with which a weld metal having excellent low-temperature toughness can be obtained, and a method of manufacturing a welded joint using the solid wire.

Solution to Problem

Means for solving the problems includes the following aspects.

<1> A solid wire for submerged arc welding, in which a chemical component of the solid wire consists of, by mass% with respect to a total mass of the solid wire:

C: from 0% to 0.650%,
Si: from 0.03% to 0.50%,
Mn: from 4.1% to 30.0%,
P: from 0% to 0.050%,
S: from 0% to 0.050%,
Cu: from 0% to 5.0%,
Ni: from 1.0% to 30.0%,
Cr: from 0% to 10.0%,
Mo: from 0% to 10.0%,
Nb: from 0% to 1.00%,

V: from 0% to 1.00%,
Co: from 0% to 1.00%,
Pb: from 0% to 1.00%,
Sn: from 0% to 1.00%,
Al: from 0% to 0.10%,
Ti: from 0% to 0.10%,
B: from 0% to 0.1000%,
N: from 0% to 0.500%,
O: from 0% to 0.0050%, and
balance: Fe and impurities,
wherein:

a total (Mn + Ni) of a content of the Mn and a content of the Ni is 5.0% or more,
a total (Mn + Ni + Cr) of the content of the Mn, the content of the Ni, and a content of the Cr is 15.0% or more, and
a fraction of fcc as determined by a magnetic induction method is 70% or more.

<2> The solid wire described in <1>, in which a mass ratio (Ni/Mn) of the content of the Mn and the content of the Ni is 0.10 or more.
<3> The solid wire described in <2>, in which the mass ratio (Ni/Mn) is 1.00 or more.
<4> The solid wire described in any one of <1> to <3>, in which a content of the Ti is Ti: from 0.003% to 0.10%.
<5> A method of manufacturing a welded joint, comprising a step of submerged arc welding a steel material by using the solid wire described in any one of <1> to <4>.

According to the disclosure, it is possible to provide a solid wire for submerged arc welding which is inexpensive and with which a weld metal having excellent low-temperature toughness can be obtained, and a method of manufacturing a welded joint using the solid wire.

DETAILED DESCRIPTION

An exemplary embodiment of the disclosure will be described.
In the present specification, a numerical range that has been indicated by use of "to" in a case in which "more than" and "less than" are not attached to numerical values which are described before and after "to" means a range including these numerical values as a lower limit value and an upper limit value. A numerical range in a case in which "more than" or "less than" is attached to the numerical values which are described before and after "to" means a range not including these numerical values as the lower limit value or the upper limit value.
In a numerical range described in a stepwise manner in the present specification, an upper limit value in one stepwise numerical range may be replaced with an upper limit value in another numerical range described in a stepwise manner, or may be replaced with a value shown in Examples. A lower limit value in one stepwise numerical range may be replaced with a lower limit value in another numerical range described in a stepwise manner, or may be replaced with a value shown in Examples.
As for the content, "%" means "% by mass".
"0 to" as the content (%) means that the component is an optional component and is not necessarily contained.

<Solid Wire>

In a solid wire according to the disclosure, a chemical component of the wire has a predetermined composition.
With the above configuration, the solid wire according to the disclosure is a solid wire for submerged arc welding which is inexpensive and with which a weld metal having excellent low-temperature toughness can be obtained.
The solid wire according to the disclosure has been found from the following findings.
The inventors have studied a technique for obtaining a wire for submerged arc welding in which the low-temperature toughness of the weld metal can be improved even when the Ni content is reduced and the Mn content is increased. As a result, the following findings were obtained.
In order to secure low-temperature toughness, it is preferable to form the structure of the weld metal into an austenite single phase. Both Ni and Mn are austenite stabilizing elements. However, when Ni was excessively reduced or Mn was increased, the stacking fault energy was lowered and the toughness was deteriorated. Therefore, by controlling the contents of Ni and Mn, a decrease in stacking fault energy was prevented. Thereby, a weld metal having excellent low-temperature toughness can be obtained even when the Ni content in the entire wire is reduced and the Mn content is increased.

From the above findings, it is found that the solid wire for submerged arc welding according to the disclosure is a wire which is inexpensive and with which a weld metal having excellent low-temperature toughness can be obtained.

Hereinafter, the reasons for limiting the requirements (including optional requirements) constituting the solid wire according to the disclosure will be specifically described.

The solid wire for submerged arc welding according to the disclosure is melted together with a part of a steel material and the flux used for welding by submerged arc welding, and becomes a weld metal after solidification.

(Chemical Component of Solid Wire)

Hereinafter, a preferred chemical component of the solid wire according to the disclosure will be described.

In the description of the chemical component of the solid wire, "%" means "by mass% with respect to the total mass of the solid wire" unless otherwise specified.

In a case in which the solid wire according to the disclosure has a plating layer on an outer surface, the chemical component of the solid wire also includes a chemical component of the plating layer.

The chemical component of the solid wire according to the disclosure consists of

C: from 0% to 0.650%,
Si: from 0.03% to 0.50%,
Mn: from 4.1% to 30.0%,
P: from 0% to 0.050%,
S: from 0% to 0.050%,
Cu: from 0% to 5.0%,
Ni: from 1.0% to 30.0%,
Cr: from 0% to 10.0%,
Mo: from 0% to 10.0%,
Nb: from 0% to 1.0%,
V: from 0% to 1.0%,
Co: from 0% to 1.0%,
Pb: from 0% to 1.0%,
Sn: from 0% to 1.0%,
Al: from 0% to 0.10%,
Ti: from 0% to 0.10%,
B: from 0% to 0.1000%,
N: from 0% to 0.500%,
O: from 0% to 0.0050%, and
balance: Fe and impurities,
a total (Mn + Ni) of a content of the Mn and a content of the Ni is 5.0% or more,
a total (Mn + Ni + Cr) of the content of the Mn, the content of the Ni, and a content of the Cr is 15.0% or more, and
a fraction of fcc as determined by a magnetic induction method is 70% or more.

(C: from 0% to 0.650%)

C is an element that generates spatters. For reducing spatters, the lower the C content of the wire is, the more advantageous it is. C is also an interstitial solid solution strengthening element. When the C content of the wire is excessive, the wire becomes hard, and core wire processing becomes difficult. Spatters also increase.

Therefore, the C content of the wire is set to from 0% to 0.650%.

However, in order to set the C content of the wire to 0%, the costs for removing C increase. There is a concern that the C content of the wire is insufficient and the strength of the weld metal is insufficient. Therefore, the lower limit of the C content of the wire may be set to 0.003%, 0.005%, or 0.008%.

The upper limit of the C content in the wire is preferably 0.600%, 0.500%, 0.400%, 0.300%, 0.200%, less than 0.200%, 0.190%, 0.180%, 0.150%, or 0.120%.

(Si: from 0.03% to 0.50%)

Si is a deoxidizing element. When the Si content of the wire is too low, the P content of the wire increases.

Si has low solid solubility relative to an austenite phase, and as the Si content becomes more increased, a brittle phase, such as an intermetallic compound and $\delta$ ferrite, is more likely to be generated at a high temperature, which deteriorates high-temperature ductility.

Therefore, the Si content of the wire is set to from 0.03% to 0.50%.

The lower limit of the Si content of the wire is preferably 0.04%, 0.05%, or 0.08%.

The upper limit of the Si content of the wire is preferably less than 0.50%, 0.48%, 0.45%, 0.40%, 0.35%, 0.30%, or 0.20%.

(Mn: from 4.1% to 30.0%)

When Mn is excessively added, the stacking fault energy decreases and the toughness deteriorates.

Mn is an austenite stabilizing element. When the Mn content of the wire is too low, austenitization of the weld metal hardly proceeds, and the low-temperature toughness is deteriorated.

Therefore, the Mn content of the wire is set to from 4.1% to 30.0%.

The lower limit of the Mn content of the wire is preferably 4.2%, 5.0%, more than 5.0%, 5.2%, more than 6.0%, 6.2%, 7.0%, more than 7.0%, 7.2%, more than 10.0%, or 10.2%.

The upper limit of the Mn content of the wire is preferably 28.0%, 26.0%, 25.0%, 23.0%, 21.0%, 20.0%, 19.0%, 18.0%, 16.8%, 15.0%, 14.8%, or 12.0%.

(P: from 0% to 0.050%)

Since P is an impurity element and reduces the toughness of the weld metal, it is preferable to reduce the P content of the wire as much as possible. Therefore, the lower limit of the P content of the wire is set to 0%. However, from the viewpoint of reducing the costs for removing P, the P content of the wire may be 0.003% or more.

When the P content of the wire is 0.050% or less, an adverse effect of P on the toughness is within an acceptable range.

Therefore, the P content of the wire is set to from 0% to 0.050%.

In order to effectively suppress the decrease in toughness of the weld metal, the P content of the wire is preferably 0.040% or less, 0.030% or less, 0.020% or less, 0.015% or less, or 0.010% or less.

(S: from 0% to 0.050%)

Since S is an impurity element and reduces the toughness of the weld metal, it is preferable to reduce the S content of the wire as much as possible. Therefore, the lower limit of the S content of the wire is set to 0%. However, from the viewpoint of reducing the costs for removing S, the S content of the wire may be 0.003% or more.

When the S content of the wire is 0.050% or less, an adverse effect of S on the toughness is within an acceptable range.

Therefore, the S content of the wire is set to from 0% to 0.050%.

In order to effectively suppress the decrease in toughness of the weld metal, the S content of the wire is preferably 0.040% or less, 0.030% or less, 0.020% or less, 0.015% or less, or 0.010% or less.

(Cu: from 0% to 5.0%)

Cu is a precipitation strengthening element and may be contained in the wire in order to improve the strength of the weld metal. Cu is an austenite stabilizing element and may be contained in the wire in order to improve the low-temperature toughness of the weld metal. When the Cu content of the wire is excessive, the above effect is saturated. When the Cu content of the wire is excessive, the wire becomes hard, and core wire processing becomes difficult.

Therefore, the Cu content of the wire is set to from 0% to 5.0%.

The lower limit of the Cu content of the wire is preferably 0.3%, 0.5%, or 0.7%.

The upper limit of the Cu content of the wire is preferably 4.5%, 4.0%, or 3.5%.

(Ni: from 1.0% to 30.0%)

Ni is an austenite stabilizing element. When the Ni content of the wire is too low, austenitization of the weld metal hardly proceeds, and the low-temperature toughness is deteriorated.

When the Ni content of the wire is increased, the cost of the wire is increased.

Therefore, the Ni content of the wire is set to from 1.0% to 30.0%.

The lower limit of the Ni content of the wire is preferably 2.0%, 3.0%, 3.2%, 3.6%, 3.7%, 4.2%, 4.7%, 5.0%, 5.2%, more than 6.0%, 6.2%, 7.0%, more than 8.0%, or 8.2%.

The upper limit of the Ni content of the wire is preferably 28.0%, 26.0%, 24.0%, 22.0%, 20.0%, 19.0%, 18.0%, 15.0%, or 12.0%.

(Cr: from 0% to 10.0%)

Cr is an austenite stabilizing element and may be contained in the wire in order to improve the low-temperature toughness of the weld metal.

When the Cr content of the wire is excessive, a martensite structure is formed in the wire, and core wire processing becomes difficult. When the Cr content of the wire is excessive, the amount of a low-melting-point compound in the molten metal increases, and the solid-liquid coexisting temperature range of the molten metal is widened, so that hot cracking is likely to occur.

Therefore, the Cr content of the wire is set to from 0% to 10.0%.

The lower limit of the Cr content of the wire is preferably 0.01%, 0.02%, 1.0%, 2.0%, or 3.0%.

The upper limit of the Cr content of the wire is preferably 9.0%, 8.0%, less than 8.0%, 7.8%, 7.0%, less than 6.0%, 5.8%, or 4.8%.

(Mo: from 0% to 10.0%)

Mo is a precipitation strengthening element and may be contained in the wire in order to improve the strength of the weld metal. When the Mo content of the wire is excessive, the wire becomes hard, and core wire processing becomes difficult. When the Mo content of the wire is excessive, the strength of the weld metal becomes excessive, and the low-temperature toughness is decreased.

Therefore, the Mo content of the wire is set to from 0% to 10.0%.

The lower limit of the Mo content of the wire is preferably 1.0%, 2.0%, or 3.0%.

The upper limit of the Mo content of the wire is preferably 9.0%, 8.0%, or 7.0%.

(Nb: from 0% to 1.00%)

Nb is an element that forms a carbide in the weld metal and increases the sheath of the weld metal, and thus may be contained in the wire.

When the Nb content of the wire is excessive, the wire becomes hard, and core wire processing becomes difficult. When the Nb content of the wire is excessive, there is a concern that the hot cracking of the weld metal occurs.

Therefore, the Nb content of the wire is set to from 0% to 1.00%.

The lower limit of the Nb content of the wire is preferably 0.01%, 0.05%, 0.1%, 0.15%, or 0.2%.

The upper limit of the Nb content of the wire is preferably 0.95%, 0.90%, 0.85%, or 0.80%.

(V: from 0% to 1.00%)

V is an element that forms a carbonitride in the weld metal and increases the sheath of the weld metal, and thus may be contained in the wire.

When the V content of the wire is excessive, the wire becomes hard, and core wire processing becomes difficult. When the V content of the wire is excessive, there is a possibility that the hot cracking of the weld metal occurs.

Therefore, the V content of the wire is set to from 0% to 1.00%.

The lower limit of the V content of the wire is preferably 0.01%, 0.05%, 0.1%, 0.15%, or 0.20%.

The upper limit of the V content of the wire is preferably 0.95%, 0.90%, 0.85%, or 0.80%.

(Co: from 0% to 1.00%)

Since Co is an element that increases the strength of the weld metal by solid solution strengthening, Co may be contained in the wire.

When the Co content of the wire is excessive, the wire becomes hard, and core wire processing becomes difficult. When the Co content of the wire is excessive, the ductility of the weld metal is decreased, and the toughness cannot be secured.

Therefore, the Co content of the wire is set to from 0% to 1.00%.

The lower limit of the Co content of the wire is preferably 0.01%, 0.05%, 0.1%, 0.15%, or 0.20%.

The upper limit of the Co content of the wire is preferably 0.95%, 0.90%, 0.85%, or 0.80%.

(Pb: from 0% to 1.00%)

Since Pb has an effect of improving the toe moldability between the steel material as a base material and the weld metal to improve the machinability of the weld metal, Pb may be contained in the wire.

When the Pb content of the wire is excessive, an arc state is deteriorated to increase spatters.

Therefore, the Pb content of the wire is set to from 0% to 1.00%.

The lower limit of the Pb content of the wire is preferably 0.01%, 0.05%, 0.1%, 0.15%, or 0.20%.

The upper limit of the Pb content of the wire is preferably 0.95%, 0.90%, 0.85%, or 0.80%.

(Sn: from 0% to 1.00%)

Since Sn is an element that improves the corrosion resistance of the weld metal, Sn may be contained in the wire.

When the Sn content of the wire is excessive, there is a concern that cracking may occur in the weld metal.

Therefore, the Sn content of the wire is set to from 0% to 1.00%.

The lower limit of the Sn content of the wire is preferably 0.01%, 0.05%, 0.1%, 0.15%, or 0.20%.

The upper limit of the Sn content of the wire is preferably 0.95%, 0.90%, 0.85%, or 0.80%.

(Al: from 0% to 0.10%)

Al is a deoxidizing element and may be contained in the wire in order to suppress welding defects and improve the cleanliness of the weld metal.

When the Al content of the wire is excessive, coarse inclusions are generated in the wire, and core wire processing becomes difficult. When the Al content of the wire is excessive, Al may form a nitride or an oxide in the weld metal to decrease the low-temperature toughness of the weld metal.

Therefore, the Al content of the wire is set to from 0% to 0.10%.

The lower limit of the Al content of the wire is preferably 0.01%, 0.02%, or 0.03%.

The upper limit of the Al content of the wire is preferably 0.09%, 0.08%, or 0.07%.

(Ti: from 0% to 0.10%)

Ti is a deoxidizing element and may be contained in the wire in order to suppress welding defects and improve the cleanliness of the weld metal.

When the Ti content of the wire is excessive, coarse inclusions are generated in the wire, and core wire processing becomes difficult. When the Ti content of the wire is excessive, a carbide may be generated in the weld metal to deteriorate the toughness of the weld metal.

Therefore, the Ti content of the wire is set to from 0% to 0.10%.

The lower limit of the Ti content of the wire is preferably 0.003%, 0.01%, 0.02%, or 0.03%.

The upper limit of the Ti content of the wire is preferably 0.09%, 0.08%, 0.07%, or 0.05%.

(B: from 0% to 0.1000%)

B is an austenite stabilizing element and is also an interstitial solid solution strengthening element, and may be contained in the wire in order to improve the low-temperature toughness and strength of the weld metal.

When the B content of the wire is excessive, the wire becomes hard, and core wire processing becomes difficult. When the B content of the wire is excessive, $M_{23}(C,B)_6$ precipitates, which causes toughness deterioration.

Therefore, the B content of the wire is set to from 0% to 0.1000%.

The lower limit of the B content of the wire is preferably 0.0005%, 0.0010%, or 0.0020%.

The upper limit of the B content of the wire is preferably 0.0800%, 0.0500%, or 0.0100%.

(N: from 0% to 0.500%)

N is an austenite stabilizing element and is also an interstitial solid solution strengthening element, and may be contained in the wire in order to improve the low-temperature toughness and strength of the weld metal.

When the N content of the wire is excessive, the wire becomes hard, and core wire processing becomes difficult. When the N content of the wire is excessive, the occurrence of blowing increases, which causes welding defects.

Therefore, the N content of the wire is set to from 0% to 0.500%.

The lower limit of the N content of the wire is preferably 0.0001%, 0.0002%, or 0.0004%.

The upper limit of the N content of the wire is preferably 0.400%, 0.200%, 0.100%, 0.050%, or 0.020%.

(O: from 0% to 0.0050%)

O may be contained in the wire as an impurity. However, when the O content is excessive, toughness and ductility in the weld metal are deteriorated, and thus the upper limit of the O content of the wire is set to 0.0050% or less.

The upper limit of the O content of the wire is preferably 0.0040% or 0.0030%.

From the viewpoint of suppressing an increase in manufacturing cost due to a decrease in the O content, the lower limit of the O content of the wire is preferably 0.0003% or 0.0005%.

(Balance: Fe and Impurities)

Other remainder components in the chemical component of the wire are Fe and impurities.

The impurities mean raw materials such as minerals or scraps or components to be incorporated by various factors of a manufacturing process when the wire is industrially manufactured, which are acceptable within a range not adversely affecting the characteristics of the wire.

(Total (Mn + Ni) of Mn Content and Ni Content)

Each of Mn and Ni is an austenite stabilizing element and improve the low-temperature toughness of the weld metal. Since Ni is an expensive metal, in order to improve the low-temperature toughness of the weld metal while suppressing the cost of the wire, the total (Mn + Ni) of the Mn content and the Ni content is set to 5.0% or more while each of the Mn content and the Ni content in the wire satisfies the above range.

The total (Mn + Ni) of the Mn content and the Ni content in the wire is preferably 5.4% or more, 5.6% or more, 5.7% or more, 6.0% or more, 6.2% or more, 6.7% or more, 6.9% or more, 7.0% or more, 7.2% or more, 10.0% or more, or 15.0% or more.

Mn is an element that is excessively added to reduce the stacking fault energy and cause reduction in toughness. Therefore, from the viewpoint of suppressing the cost of the wire and improving the low-temperature toughness of the weld metal, the total (Mn + Ni) of the Mn content and the Ni content is preferably set to 37.0% or less while each of the Mn content and the Ni content in the wire satisfies the above range.

The total (Mn + Ni) of the Mn content and the Ni content in the wire is more preferably 35.0% or less, 32.0% or less, or 30.0% or less.

(Total (Mn + Ni + Cr) of Mn Content, Ni Content, and Cr Content)

Each of Mn, Ni, and Cr is an austenite stabilizing element and improve the low-temperature toughness of the weld metal. Since Ni is an expensive metal, in order to improve the low-temperature toughness of the weld metal while suppressing the cost of the wire, the total (Mn + Ni + Cr) of the Mn content, the Ni content, and the Cr content is set to 15.0% or more while each of the Mn content, the Ni content, and the Cr content in the wire satisfies the above range.

The total (Mn + Ni + Cr) of the Mn content, the Ni content, and the Cr content in the wire is preferably 17.0% or more, 19.0% or more, 20.0% or more, 22.0% or more, 24.0% or more, 26.0% or more, 28.0% or more, or 30.0% or more.

Mn is an element that is excessively added to reduce the stacking fault energy and cause reduction in toughness. Cr is an element that forms a martensite structure, and affects the core wire processability of the wire. Cr causes an increase in the amount of a low-melting-point compound in the molten metal. Therefore, from the viewpoint of enhancing the core wire processability while suppressing the cost of the wire and improving the low-temperature toughness of the weld metal, and reducing the amount of a low-melting-point compound generated in the molten metal, the total (Mn + Ni + Cr) of the Mn content, the Ni content, and the Cr content is preferably set to 47.0% or less while each of the Mn content, the Ni content, and the Cr content in the wire satisfies the above range.

The total (Mn + Ni + Cr) of the Mn content, the Ni content, and the Cr content in the wire is more preferably 45.0% or less, 42.0% or less, or 40.0% or less.

(Mass Ratio (Ni/Mn) of Mn Content and Ni Content)

Each of Mn and Ni is an austenite stabilizing element and improve the low-temperature toughness of the weld metal. Ni is an expensive metal, and Mn is an element that is excessively added to reduce the stacking fault energy and cause reduction in toughness. Ni improves the toughness by increasing the stacking fault energy.

Therefore, from the viewpoint of improving the low-temperature toughness of the weld metal while suppressing the cost of the wire, the mass ratio (Ni/Mn) of the Mn content and the Ni content in the wire is preferably set to 0.10 or more.

The lower limit of the mass ratio (Ni/Mn) of the Mn content and the Ni content in the wire is more preferably 0.20, 0.30, 0.50, 0.60, 0.68, 1.00, 1.10, or 1.20.

The upper limit of the mass ratio (Ni/Mn) of the Mn content and the Ni content in the wire is preferably 25.00, 20.00, 15.00, 10.00, 8.00, or 5.00.

(Fraction of fcc Determined by Magnetic Induction Method)

In order to enhance the low-temperature toughness in the weld metal, it is preferable to increase the proportion of austenite in the structure of the wire. Therefore, the fraction of fcc in the wire is set to 70% or more. The fraction of fcc is preferably 80% or more or 90% or more, and may be 100%. The remainder of the structure is bcc.

The fraction of fcc in the structure of the wire can be determined by the following method.

A sample is collected from the wire, the fraction (%) of bcc on the sample surface is measured by a magnetic induction method using FERITSCOPE (registered trademark) FMP30 (manufactured by FISCHER INSTRUMENTS K.K.) and using a probe (FGAB 1.3-Fe) manufactured by FISCHER INSTRUMENTS K.K. as a probe of the measuring instrument, and the arithmetic average value of the measured fractions of bcc is determined. The fraction (%) of fcc in the structure of the wire is determined using the obtained average value of the fractions of bcc by the following formula.

$$\text{Fraction of fcc} = 100 - \text{Fraction of bcc}$$

The solid wire according to the disclosure may further include a lubricant applied to the wire surface. The lubricant applied to the wire surface has an effect of improving wire feeding performance during welding. As a lubricant for a welding wire, various kinds of lubricants (for example, vegetable oil such as palm oil) can be used, but in order to suppress welding defects, it is preferable to use one or both of polytetrafluoroethylene oil (PTFE oil) and perfluoropolyether oil (PFPE oil) not containing H. As described above, the solid wire according to the disclosure may further include a plating layer formed on the wire surface. In this case, the lubricant is applied to the surface of the plating layer.

(Wire Diameter)

The diameter of the solid wire according to the disclosure is not particularly limited, and is, for example, from φ1.6 mm to φ2.4 mm. The diameter of a general solid wire is from φ1.6 mm to φ6.4 mm.

<Method of Manufacturing Solid Wire>

A method of manufacturing a solid wire according to the disclosure will be described.

The manufacturing method described below is an example, and the method of manufacturing a solid wire according to the disclosure is not limited to the following method.

The solid wire according to the disclosure can be manufactured by a manufacturing process similar to a usual method of manufacturing a solid wire.

That is, steel having the above-described chemical component is first melted, and then forge processing is performed if necessary. Thereafter, the steel is processed into a rod shape through rolling. This rod-shaped steel is subjected to wire drawing to obtain a solid wire. The solid wire may be appropriately subjected to a heat treatment so that the feeding property is not impaired.

A plating layer may be formed on the surface of the solid wire. In this case, an average chemical component of the entire solid wire including the chemical component of the plating layer needs to be within the above range. A lubricant may be applied to the surface of the solid wire.

<Method of Manufacturing Welded Joint>

A method of manufacturing a welded joint (welding method) according to the disclosure will be described.

The method of manufacturing a welded joint according to the disclosure includes a step of submerged arc welding a steel material by using the solid wire according to the disclosure described above.

The solid wire according to the disclosure is melted together with a part of a steel material and the flux used for welding by submerged arc welding, and becomes a weld metal after solidification.

A welded joint manufactured by the method of manufacturing a welded joint according to the disclosure has a high strength and high toughness. A welded structure having the welded joint manufactured by the method of manufacturing a welded joint according to the disclosure also has a high strength and high toughness in the welded joint.

In the submerged arc welding, it is possible to apply a general submerged arc welding device in which a granular flux is sprayed in advance on a welding line, the solid wire according to the disclosure is fed into the flux, and welding is

## EP 4 596 165 A1

performed by arc heat generated from an arc between the wire and the steel material in the flux. The submerged arc welding conditions may be a general method.

In the method of manufacturing a welded joint according to the disclosure, the type of steel material (a material to be welded) as a base material of the welded joint is not particularly limited, but for example, Ni-based low temperature steel having a plate thickness of 20 mm or more and containing from 6% to 9% of Ni can be suitably used.

The method of manufacturing a welded joint according to the disclosure may include a step of welding a steel material by using the solid wire according to the disclosure in any one or more of a first pass to the last pass. In a case in which the welding is performed only in a single pass, the solid wire according to the disclosure is used in the single pass.

The polarity of the solid wire may be either positive or negative because the influence on the diffusible hydrogen amount of the weld metal and the amount of spatters generated is negligibly small, but the polarity is preferably positive.

A welded joint obtained by the method of manufacturing a welded joint according to the disclosure includes a steel material as a base material and a welded part including a weld metal and a weld heat affected zone. The welded joint according to the disclosure is manufactured by using the solid wire according to the disclosure, and includes a weld metal having a favorable bead shape. Therefore, a welded structure having the welded joint manufactured by the method of manufacturing a welded joint according to the disclosure also includes a weld metal having a favorable bead shape. The tensile strength of the resulting weld metal is preferably high, for example, from 590 MPa to 900 MPa.

Examples

The feasibility and effects of the disclosure will be described in more detail with reference to the disclosure examples and comparative examples, but the following examples do not limit the disclosure, and any design change dedicated to the gist of the preceding and following description is included in the technical scope of the disclosure.

(Manufacturing Solid Wire)

The solid wires of examples of the disclosure and comparative examples were manufactured by the method described below.

First, steels having chemical components shown in Tables 1-A to 1-D were melted and then subjected to forge processing. Thereafter, the steel was processed into a rod shape through rolling, and the rod-shaped steel was subjected to wire drawing to obtain a solid wire. In this way, a solid wire having a final wire diameter of φ2.4 mm was trial-produced.

When the chemical component of the obtained solid wire was analyzed, the solid wire had the chemical components shown in Tables 1-A to 1-D.

The unit of the content of the chemical component of the wire shown in Tables 1-A to 1-D is mass% with respect to the total mass of the solid wire.

[Table 1-A]

| Wire No. | Classification | C | Si | Mn | P | S | Cu | Ni | Cr | Mo | Nb | V | Co |
|---|---|---|---|---|---|---|---|---|---|---|---|---|---|
| 1 | Example of disclosure | 0.051 | 0.05 | 18.0 | 0.011 | 0.021 | 3.0 | 5.0 | 6.0 | | 0.03 | 0.06 | 0.40 |
| 2 | Example of disclosure | 0.004 | 0.04 | 20.0 | 0.029 | 0.010 | | 1.0 | 10.0 | 6.0 | | | |
| 3 | Example of disclosure | 0.003 | 0.04 | 20.0 | 0.018 | 0.021 | | 1.0 | 10.0 | 9.0 | 0.09 | | |
| 4 | Example of disclosure | 0.010 | 0.04 | 20.0 | 0.019 | 0.019 | | 1.0 | 10.0 | 8.0 | 0.01 | | |
| 5 | Example of disclosure | 0.003 | 0.04 | 20.0 | 0.010 | 0.008 | | 1.2 | | 4.0 | 0.08 | | 0.34 |
| 6 | Example of disclosure | 0.010 | 0.05 | 8.0 | 0.022 | 0.008 | | 10.0 | 3.0 | 10.0 | | 0.03 | 0.17 |
| 7 | Example of disclosure | 0.050 | 0.20 | 10.0 | 0.008 | 0.004 | | 13.0 | 7.0 | 3.0 | 0.01 | 0.01 | 0.02 |
| 8 | Example of disclosure | 0.024 | 0.17 | 17.0 | 0.018 | 0.024 | | 10.0 | | | | 0.07 | 0.18 |

11

(continued)

| Wire No. | Classification | C | Si | Mn | P | S | Cu | Ni | Cr | Mo | Nb | V | Co |
|---|---|---|---|---|---|---|---|---|---|---|---|---|---|
| 9 | Example of disclosure | 0.161 | 0.19 | 17.0 | 0.014 | 0.029 | | 16.0 | | 6.0 | 0.09 | 0.05 | 0.49 |
| 10 | Example of disclosure | 0.190 | 0.10 | 20.0 | 0.021 | 0.007 | | 16.0 | | 3.0 | 0.06 | | 0.16 |
| 11 | Example of disclosure | 0.197 | 0.45 | 18.0 | 0.025 | 0.006 | | 16.0 | 5.0 | 3.0 | 0.09 | 0.07 | |
| 12 | Example of disclosure | 0.197 | 0.15 | 16.0 | 0.026 | 0.017 | | 16.0 | 7.0 | 2.0 | 0.05 | | 0.05 |
| 13 | Example of disclosure | 0.150 | 0.20 | 13.0 | 0.008 | 0.004 | | 13.0 | 7.0 | 3.0 | 0.01 | 0.01 | 0.02 |
| 14 | Example of disclosure | 0.125 | 0.18 | 10.0 | 0.009 | 0.015 | | 20.0 | 5.0 | 4.0 | | | 0.02 |
| 15 | Example of disclosure | 0.163 | 0.17 | 16.0 | 0.028 | 0.021 | | 16.0 | | 3.0 | | | |
| 16 | Example of disclosure | 0.110 | 0.09 | 16.0 | 0.020 | 0.030 | 2.0 | 19.0 | | | | | 0.02 |
| 17 | Example of disclosure | 0.043 | 0.05 | 11.0 | 0.027 | 0.022 | 2.0 | 20.0 | | 5.0 | 0.02 | | |
| 18 | Example of disclosure | 0.041 | 0.05 | 19.0 | 0.012 | 0.005 | 5.0 | 12.0 | | | | | |
| 19 | Example of disclosure | 0.113 | 0.05 | 20.0 | 0.022 | 0.025 | 5.0 | 20.0 | 10.0 | 6.0 | | | 0.29 |

[Table 1-B]

| Wire No. | Classification | Pb | Sn | Al | Ti | B | N | O | Mn + Ni | Mn + Ni + Cr | Ni/Mn | Fraction (%) of fcc | Remarks |
|---|---|---|---|---|---|---|---|---|---|---|---|---|---|
| 1 | Example of disclosure | | | 0.08 | 0.07 | 0.0029 | 0.494 | 0.0011 | 23.0 | 29.0 | 0.28 | 98 | |
| 2 | Example of disclosure | | | | | | | 0.0027 | 21.0 | 31.0 | 0.05 | 99 | |
| 3 | Example of disclosure | | | 0.06 | | 0.0038 | | 0.0025 | 21.0 | 31.0 | 0.05 | 96 | Coated |
| 4 | Example of disclosure | | | 0.08 | | | | 0.0020 | 21.0 | 31.0 | 0.05 | 99 | |
| 5 | Example of disclosure | 0.26 | | 0.02 | | | 0.495 | 0.0010 | 21.2 | 21.2 | 0.06 | 97 | |
| 6 | Example of disclosure | | | | 0.05 | | 0.286 | 0.0010 | 18.0 | 21.0 | 1.25 | 97 | Coated |
| 7 | Example of disclosure | | | | | 0.0010 | 0.015 | 0.0030 | 23.0 | 30.0 | 1.30 | 100 | |
| 8 | Example of disclosure | | | | 0.02 | | 0.459 | 0.0014 | 27.0 | 27.0 | 0.59 | 100 | |
| 9 | Example of disclosure | | | 0.03 | 0.06 | | 0.001 | 0.0014 | 33.0 | 33.0 | 0.94 | 100 | |
| 10 | Example of disclosure | | | 0.03 | | 0.0041 | 0.061 | 0.0029 | 36.0 | 36.0 | 0.80 | 100 | |
| 11 | Example of disclosure | | 0.02 | 0.10 | 0.01 | | | 0.0025 | 34.0 | 39.0 | 0.89 | 100 | Coated |
| 12 | Example of disclosure | | | 0.09 | | | 0.026 | 0.0012 | 32.0 | 39.0 | 1.00 | 96 | |
| 13 | Example of disclosure | | | | | 0.0010 | 0.015 | 0.0026 | 26.0 | 33.0 | 1.00 | 96 | |
| 14 | Example of disclosure | 0.39 | | | | | 0.021 | 0.0019 | 30.0 | 35.0 | 2.00 | 95 | |
| 15 | Example of disclosure | | | | | | | 0.0014 | 32.0 | 32.0 | 1.00 | 100 | |
| 16 | Example of disclosure | | | | | | 0.042 | 0.0018 | 35.0 | 35.0 | 1.19 | 100 | Coated |
| 17 | Example of disclosure | | 0.35 | 0.04 | | 0.0010 | | 0.0027 | 31.0 | 31.0 | 1.82 | 100 | |
| 18 | Example of disclosure | | | | | | | 0.0030 | 31.0 | 31.0 | 0.63 | 100 | |
| 19 | Example of disclosure | | | | | | 0.325 | 0.0020 | 40.0 | 50.0 | 1.00 | 100 | |

[Table 1-C]

| Wire No. | Classification | C | Si | Mn | P | S | Cu | Ni | Cr | Mo | Nb | V | Co |
|---|---|---|---|---|---|---|---|---|---|---|---|---|---|
| 20 | Example of disclosure | 0.160 | 0.05 | 15.0 | 0.028 | 0.022 | 2.0 | 16.0 | 1.0 | 9.0 | 0.03 | | 0.47 |
| 21 | Example of disclosure | 0.059 | 0.05 | 10.0 | 0.030 | 0.027 | 4.0 | 20.0 | 3.0 | 6.0 | 0.04 | | |
| 22 | Example of disclosure | 0.124 | 0.04 | 14.0 | 0.014 | 0.011 | | 20.0 | 7.0 | 2.0 | 0.10 | 0.08 | 0.04 |
| 23 | Example of disclosure | 0.350 | 0.20 | 10.0 | 0.008 | 0.004 | | 13.0 | 1.0 | 3.0 | 0.01 | | 0.02 |
| 24 | Example of disclosure | 0.098 | 0.03 | 17.0 | 0.026 | 0.029 | | 14.0 | 4.0 | 8.0 | 0.00 | 0.10 | 0.43 |
| 25 | Example of disclosure | 0.024 | 0.05 | 12.0 | 0.028 | 0.010 | 5.0 | 13.0 | 2.0 | 10.0 | 0.06 | | 0.15 |
| 26 | Example of disclosure | 0.044 | 0.05 | 14.0 | 0.015 | 0.021 | 5.0 | 17.0 | 7.0 | | 0.00 | | 0.22 |
| 27 | Example of disclosure | 0.188 | 0.03 | 17.0 | 0.028 | 0.008 | 2.0 | 13.0 | 8.0 | | 0.08 | 0.08 | 0.46 |
| 28 | Example of disclosure | 0.400 | 0.20 | 10.0 | 0.007 | 0.008 | | 13.0 | 3.0 | 3.0 | 0.01 | | |
| 29 | Example of disclosure | 0.500 | 0.20 | 10.0 | 0.014 | 0.027 | | 12.0 | | 3.0 | | 0.04 | 0.02 |
| 30 | Example of disclosure | 0.650 | 0.20 | 10.0 | 0.022 | 0.011 | | 13.0 | 0.5 | 3.0 | 0.01 | | 0.02 |
| 31 | Example of disclosure | 0.500 | 0.03 | 5.0 | 0.014 | 0.027 | | 4.0 | 7.0 | | | | |
| 32 | Example of disclosure | 0.400 | 0.20 | 29.0 | 0.007 | 0.008 | | 1.0 | | | 0.01 | | |
| 33 | Example of disclosure | 0.400 | 0.20 | 4.5 | 0.007 | 0.008 | | 29.0 | 7.0 | 3.0 | 0.01 | | |
| A1 | Comparative Example | 0.075 | 0.03 | 2.0 | 0.006 | 0.026 | | 2.0 | | 1.0 | | | |
| A2 | Comparative Example | 0.097 | 0.20 | 0.5 | 0.022 | 0.006 | 2.0 | 0.5 | 0.1 | | 0.35 | | 0.01 |
| A3 | Comparative Example | 0.058 | 0.77 | 32.0 | 0.021 | 0.020 | | 1.0 | 0.4 | 2.0 | | | 0.01 |
| A4 | Comparative Example | 0.400 | 0.03 | 5.0 | 0.014 | 0.027 | | 4.0 | 4.0 | | | | |

[Table 1-D]

| Wire No. | Classification | Pb | Sn | Al | Ti | B | N | O | Mn + Ni | Mn + Ni + Cr | Ni/Mn | Fraction (%) of fcc | Remarks |
|---|---|---|---|---|---|---|---|---|---|---|---|---|---|
| 20 | Example of disclosure | 0.00 | | 0.00 | | | 0.226 | 0.0025 | 31.0 | 32.0 | 1.07 | 100 | |
| 21 | Example of disclosure | | | 0.04 | | | | 0.0021 | 30.0 | 33.0 | 2.00 | 100 | |
| 22 | Example of disclosure | 0.17 | | 0.04 | 0.07 | | 0.001 | 0.0027 | 34.0 | 41.0 | 1.43 | 100 | |
| 23 | Example of disclosure | | | | | | 0.015 | 0.0030 | 23.0 | 24.0 | 1.30 | 100 | |
| 24 | Example of disclosure | | | 0.00 | 0.05 | | 0.180 | 0.0021 | 31.0 | 35.0 | 0.82 | 100 | |
| 25 | Example of disclosure | | 0.01 | 0.07 | | | 0.186 | 0.0024 | 25.0 | 27.0 | 1.08 | 100 | Coated |
| 26 | Example of disclosure | | | 0.03 | | | 0.434 | 0.0018 | 31.0 | 38.0 | 1.21 | 100 | |
| 27 | Example of disclosure | | | 0.08 | 0.07 | | 0.009 | 0.0018 | 30.0 | 38.0 | 0.76 | 100 | |
| 28 | Example of disclosure | | | | | 0.0010 | | 0.0028 | 23.0 | 26.0 | 1.30 | 100 | |
| 29 | Example of disclosure | | | 0.01 | | | 0.100 | 0.0006 | 22.0 | 22.0 | 1.20 | 100 | |
| 30 | Example of disclosure | | | | 0.07 | | 0.015 | 0.0039 | 23.0 | 23.5 | 1.30 | 100 | |
| 31 | Example of disclosure | | | | | | | 0.0002 | 9.0 | 16.0 | 0.80 | 98 | |
| 32 | Example of disclosure | | | 0.03 | | | 0.040 | 0.0036 | 30.0 | 30.0 | 0.03 | 100 | |
| 33 | Example of disclosure | | | | | | 0.040 | 0.0036 | 33.5 | 40.5 | 6.44 | 100 | |
| A1 | Comparative Example | | | | | | 0.162 | 0.0010 | **4.0** | **4.0** | 1.00 | **1** | |
| A2 | Comparative Example | | | 0.03 | 0.03 | 0.0080 | 0.016 | 0.0009 | **1.0** | **1.1** | 1.00 | **5** | Coated |
| A3 | Comparative Example | | | | | 0.0110 | 0.008 | 0.0028 | 33.0 | 33.4 | 0.03 | 97 | |
| A4 | Comparative Example | | | | | | | 0.0002 | 9.0 | **13.0** | 0.80 | **60** | |

The balance (that is, components other than the respective components shown in the table) of the wire shown in Tables 1-A to 1-D is iron and impurities.

Among the solid wires shown in Tables 1-A to 1-D, no lubricant is applied unless otherwise specified in the section of "Remarks". The wire described as "Coated" is a wire coated with a lubricant.

In Tables 1-A to 1-D, numerical values outside the range defined in the disclosure are underlined.

In Tables 1-A to 1-D, blanks in the tables related to the contents of chemical components means that the contents of the chemical components are less than the number of significant digits. These chemical components may be inevitably mixed or generated at a content less than the number of significant digits.

[Evaluation]

Evaluation was performed by submerged arc welding using the solid wires of examples of the disclosure and comparative examples.

Specifically, the solid wires of examples of the disclosure and comparative examples were used in combination with NITTETSU FLUX 10H manufactured by NIPPON STEEL WELDING & ENGINEERING CO., LTD., which is a flux for submerged arc welding, to perform submerged arc welding.

As a steel plate to be welded, 9% Ni steel (steel plate according to JIS G 3127:2013 SL9N590) having a plate thickness of 40 mm was used. In the evaluation, all the welding currents were direct current, and all the polarities of the wires were positive.

The welding conditions for the evaluation were the conditions shown in Table 2, and welding was performed downward. Fig. 1 shows a groove shape and a test piece collection position.

[Table 2]

| Current A | Voltage V | Rate mm/min | Heat input kJ/mm |
|---|---|---|---|
| 360 | 30 | 350 | 1.9 |

(Evaluation of Low-Temperature Toughness)

Using the solid wires of examples of the disclosure and comparative examples, the steel plate was subjected to submerged arc welding, and three impact test pieces (V-notch test pieces having a notch depth of 2 mm) were taken from 1 mm below surface of the weld metal.

The three impact test pieces were subjected to a Charpy impact test in accordance with JIS Z2242:2005 at -196°C.

A case where a Charpy absorbed energy average value of the three impact test pieces at -196°C was 34 J or more was rated as "excellent", a case where a Charpy absorbed energy average value thereof was 27 J or more and less than 34 J was rated as "passed", and a case where a Charpy absorbed energy average value thereof was less than 27 J was rated as "failed".

[Table 3]

| Wire No. | Classification | Low-temperature toughness |
|---|---|---|
| 1 | Example of disclosure | Passed |
| 2 | Example of disclosure | Passed |
| 3 | Example of disclosure | Passed |
| 4 | Example of disclosure | Passed |
| 5 | Example of disclosure | Passed |
| 6 | Example of disclosure | Excellent |
| 7 | Example of disclosure | Excellent |
| 8 | Example of disclosure | Passed |
| 9 | Example of disclosure | Passed |
| 10 | Example of disclosure | Passed |
| 11 | Example of disclosure | Passed |

(continued)

| Wire No. | Classification | Low-temperature toughness |
|---|---|---|
| 12 | Example of disclosure | Excellent |
| 13 | Example of disclosure | Excellent |
| 14 | Example of disclosure | Excellent |
| 15 | Example of disclosure | Excellent |
| 16 | Example of disclosure | Excellent |
| 17 | Example of disclosure | Excellent |
| 18 | Example of disclosure | Passed |
| 19 | Example of disclosure | Excellent |
| 20 | Example of disclosure | Excellent |
| 21 | Example of disclosure | Excellent |
| 22 | Example of disclosure | Excellent |
| 23 | Example of disclosure | Excellent |
| 24 | Example of disclosure | Passed |
| 25 | Example of disclosure | Excellent |
| 26 | Example of disclosure | Excellent |
| 27 | Example of disclosure | Passed |
| 28 | Example of disclosure | Excellent |
| 29 | Example of disclosure | Excellent |
| 30 | Example of disclosure | Excellent |
| 31 | Example of disclosure | Passed |
| 32 | Example of disclosure | Passed |
| 33 | Example of disclosure | Excellent |
| A1 | Comparative Example | Failed |
| A2 | Comparative Example | Failed |
| A3 | Comparative Example | Failed |
| A4 | Comparative Example | Failed |

It is found that the solid wires for submerged arc welding of the examples of the disclosure are excellent in weld metal low-temperature toughness.

On the other hand, the comparative example did not satisfy any of the requirements specified in the disclosure, and thus failed in one or more evaluation items.

**Claims**

1.  A solid wire for submerged arc welding, wherein a chemical component of the solid wire consists of, by mass% with respect to a total mass of the solid wire:

    C: from 0% to 0.650%,
    Si: from 0.03% to 0.50%,
    Mn: from 4.1% to 30.0%,
    P: from 0% to 0.050%,
    S: from 0% to 0.050%,
    Cu: from 0% to 5.0%,

Ni: from 1.0% to 30.0%,
Cr: from 0% to 10.0%,
Mo: from 0% to 10.0%,
Nb: from 0% to 1.00%,
V: from 0% to 1.00%,
Co: from 0% to 1.00%,
Pb: from 0% to 1.00%,
Sn: from 0% to 1.00%,
Al: from 0% to 0.10%,
Ti: from 0% to 0.10%,
B: from 0% to 0.1000%,
N: from 0% to 0.500%,
O: from 0% to 0.0050%, and
balance: Fe and impurities,
wherein:

a total (Mn + Ni) of a content of the Mn and a content of the Ni is 5.0% or more,
a total (Mn + Ni + Cr) of the content of the Mn, the content of the Ni, and a content of the Cr is 15.0% or more, and
a fraction of fcc as determined by a magnetic induction method is 70% or more.

2. The solid wire according to claim 1, wherein a mass ratio (Ni/Mn) of the content of the Mn and the content of the Ni is 0.10 or more.

3. The solid wire according to claim 2, wherein the mass ratio (Ni/Mn) is 1.00 or more.

4. The solid wire according to any one of claims 1 to 3, wherein a content of the Ti is Ti: from 0.003% to 0.10%.

5. A method of manufacturing a welded joint, comprising a step of submerged arc welding a steel material by using the solid wire according to any one of claims 1 to 4.

## INTERNATIONAL SEARCH REPORT

International application No.

**PCT/JP2022/036863**

| A. | CLASSIFICATION OF SUBJECT MATTER |
|---|---|

*B23K 35/30*(2006.01)i
FI:   B23K35/30 320C

According to International Patent Classification (IPC) or to both national classification and IPC

| B. | FIELDS SEARCHED |
|---|---|

Minimum documentation searched (classification system followed by classification symbols)

B23K35/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/130759 A1 (JFE STEEL CORPORATION) 23 June 2022 (2022-06-23) paragraphs [0054]-[0081] | 1-2, 5 |
| Y | paragraphs [0035], [0054]-[0081] | 4-5 |
| Y | JP 2009-50866 A (NIPPON STEEL CORP) 12 March 2009 (2009-03-12) paragraph [0094] | 4-5 |
| X | CN 114227063 A (XINZHOU GENERAL WELDING TECHNOLOGY LIMITED COMPANY) 25 March 2022 (2022-03-25) paragraphs [0077]-[0082] | 1-2, 5 |
| Y | paragraphs [0010], [0077]-[0082] | 1-5 |
| Y | JP 2022-516181 A (NANJING IRON & STEEL CO LTD) 24 February 2022 (2022-02-24) paragraphs [0015]-[0028] | 1-5 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 December 2022** | **13 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/036863**

| Patent document cited in search report | | | Publication date (day/month/year) | Patent family member(s) | Publication date (day/month/year) |
|---|---|---|---|---|---|
| WO | 2022/130759 | A1 | 23 June 2022 | (Family: none) | |
| JP | 2009-50866 | A | 12 March 2009 | (Family: none) | |
| CN | 114227063 | A | 25 March 2022 | (Family: none) | |
| JP | 2022-516181 | A | 24 February 2022 | EP 3892416 A1 paragraphs [0012]-[0018] CN 109623198 A WO 2020/140379 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008246507 A